# EUROPEAN PATENT APPLICATION

(11) **EP 3 459 359 A1**
(43) Date of publication of application: **27.03.2019**
(21) Application number: 18188729.0
(22) Date of filing: 13.08.2018
(51) Int. Cl.: A23K 40/10, A23K 10/38, A23K 50/10

(54) **PROCESS OF DEHYDRATION AND GRANULATION OF BREWERS´ GRAIN**

(30) Priority: 25.09.2017 PT 2017110299
(71) Applicant: Cordeiro & Peça Lda., 3060-522 Cantanhede (PT)
(72) Inventor: Coelho Peça, Delfim, 3060-522 Portunhos (PT)
(74) Representative: Ferreira, Maria Silvina

(57) **Abstract**

The present application describes a process of dehydration and granulation of brewers' grain.

This technology is useful for the storage and packing of dry brewers' grain, insofar as the humid brewers' grain, on leaving the brewery, has between 60 to 80% humidity and begins to decompose after 4 or 5 days, forcing the producers to store the product in a silo.

The described process involves a first stage of humidity removal, followed by a drying stage. The humidity content of the brewers' grain goes from 60 to 80% before the process to between 10 to 15% after the process, maintaining the nutritional value. After drying, the brewers' grain is granulated and stored.

After the process described in the present application, the dry brewers' grain may be used in animal feed, mainly for cattle, pigs and goats.

## Description

### Technical domain

The present application describes a process of dehydration and granulation of brewers' grain.

### Summary

The present application refers to a process of dehydration and granulation of brewers' grain comprising the following stages:
- collection of the brewers' grain from the brewing industry;
- the brewers' grain is sent to a press (decanter);
- removal of 5 to 15% (w/w) of the total humidity of the brewers' grain;
- the squeezed brewers' grain is sent to the drying equipment;
- drying of the brewers' grain;
- the dry brewers' grain is sent to a granulating machine;
- the granulated brewers' grain is sent to the cooling equipment;
- cooling of the granulated brewers' grain;
- the cooled brewers' grain is bagged and stored;
wherein the humidity content of the brewers' grain decreases from between 60 to 80% (w/w) before the process to between 10 to 15% (w/w) after the process.

In one embodiment, the drying stage of the process of dehydration and granulation of the brewers' grain occurs at a temperature between 150 to 200 °C at the entrance of the drying equipment and at a temperature between 35 to 40 °C at the exit of the drying equipment.

In another embodiment, the granulated brewers' grain in the process of dehydration and granulation of brewers' grain is cooled between 15 to 30 °C.

In yet another form of embodiment, the granulated brewers' grain in the process of dehydration and granulation of brewers' grain is cooled between 21 to 25 °C.

In one embodiment, the dehydrated and granulated brewers' grain obtained by the described process is used as a food supplement in cattle feed.

### Prior state of the art

Brewers' grain is known in the state of the art as a sub-product of the distillation of cereals, particularly barley in the case of beer, more specifically from the beer production process.

It is a sub-product with a high protein content, about 25 to 27% (w/w), which makes it very important as a food supplement, specifically as a food supplement in the feed of cattle, more specifically dairy cattle.

However, this sub-product has disadvantages related to its storage due to its high humidity content, above 70% (w/w), more specifically about 76% (w/w) humidity after brewing. After 4 to 5 days, it begins to decompose, forcing its storage in a silo for later use.

The present application describes a technical solution to the problem described above using a process of dehydration of the brewers' grain not previously described.

Document [1] describes in detail the nutritional value of the brewers' grain and the possibility of their use as a food supplement in cattle feed. However, this document does not refer to any process for obtaining dehydrated brewers' grain for this purpose.

### General description

The present application describes a process that is optimized and adapted to a sub-product from the brewing industry, more specifically a process of dehydration of brewers' grain.

Every year, with the arrival of summer, breweries increase their production by approximately 40%. Consequently, the brewers' grain resulting from the beer production processes increases in the same proportion creating, from the start, some storage issues and, sometimes, the selling of this sub-product.

The storage issues are related to the characteristics of the brewers' grain proceeding from the brewing that have a high humidity content. The high humidity content prevents the storage of the brewers' grain for longer than 5 days with the disadvantage of their decomposition.

To overcome this problem, the present application describes a process of dehydration of brewers' grain through a drying process with a reduction of the humidity content between 60 to 80% (w/w), more specifically a reduction of humidity content from 76% (w/w) to between 10 to 15% (w/w), more specifically to 12% (w/w), and a subsequent granulation obtaining between 25 to 35% (w/w) of final dry matter, more specifically 30% (w/w) of final dry matter.

This process allows the storage of this sub-product for longer periods, thereby avoiding its rapid decomposition.

It is also important to emphasize that the nutritional value of the brewers' grain is kept practically intact after this process.

Taking into account that the brewers' grain has a high protein content between 25 to 27% (w/w) and is very important as a food supplement, this sub-product from the brewing industry can be used in sectors in which it was not previously used, particularly in the agricultural sector as feed for cattle, more specifically dairy cattle.

The goal of this process is to remove between 60 to 70% (w/w) humidity from the brewers' grain through a process of dehydration and granulation and its subsequent storage in "big bags".

The present technology is useful for the storage, packing and handling of the product, allowing storage for a clearly longer time comparing to the undried product and may also be stored for about 90 days, maintaining the original nutritional composition. Thus, the process described in the present application presents advantages regarding storage because it allows storing 3 times more product in the same space and packing the dried and granulated product in big bags for a much longer time. In this concept, the success of this process opens doors to new uses of the product and, consequently, to new customers.

### Description of the Figures

**Figure 1****:** Results of the laboratory tests for humid brewers' grain. The results are presented in weight percentages.
**Figure 2****:** Results of the laboratory tests for dry brewers' grain.

### Detailed description of the forms of embodiment

The present application describes a process of dehydration and granulation of brewers' grain from the brewing industry.

The dehydration of brewers' grain is performed through a drying process with a reduction of the humidity content between 60 to 80% (w/w), more specifically a reduction of humidity content from 76% (w/w) to between 10 to 15% (w/w), more specifically to 12% (w/w). The process also includes a granulation stage obtaining between 25 to 35% (w/w) of final dry matter, more specifically 30% (w/w) of final dry matter.

The brewers' grain from the brewing industry is unloaded into a grain hopper that is sent to a press (decanter), using screw conveyors and conveyor belts.

In a first stage, the press (decanter) removes between 5 to 15% (w/w) humidity, more specifically 10% (w/w) humidity, of the total humidity of the brewers' grain.

Next, the squeezed brewers' grain is sent to the drying equipment in order to dehydrate the brewers' grain.

The drying equipment is a substantially cylindrical equipment, where the squeezed brewers' grain enters through one side and exits dehydrated through the other side.

After the drying stage, the dry brewers' grain is sent to a granulating machine to be transformed into granules.

Subsequently, the granulated brewers' grain is sent to a cooling equipment.

After being cooled to a temperature between 15 to 30 °C, preferably between 21 to 25 °C, the granulated brewers' grain is bagged in "big bags" and stored.

The process of dehydration and granulation of brewers' grain of the present application comprises the following stages:
- collection of the brewers' grain from the brewing industry;
- sending of the brewers' grain to a press (decanter);
- removal of 5 to 15% humidity from the brewers' grain;
- the squeezed brewers' grain is sent to the drying equipment;
- drying of the brewers' grain at a temperature between 150 to 200 °C at the entrance of the drying equipment and at a temperature between 35 to 40 °C at the exit of the drying equipment;
- the dry brewers' grain is sent to a granulating machine;
- the granulated brewers' grain is sent to the cooling equipment;
- cooling of the granulated brewers' grain between 15 to 30 °C, preferably between 21 to 25 °C;
- the cooled brewers' grain is bagged and stored.

In one embodiment, the brewers' grain continuously enters and exits the dryer, remaining up to 2 minutes inside the drying equipment.

In one embodiment, in the drying stage, the energy used for the drying equipment is natural gas, which is burned in a burner that connects to a combustion chamber. The hot air generated by this combustion is sucked through the dryer with the help of a ventilator.

In one embodiment, at least two temperature probes are positioned, one at the entrance and the other at the exit of the drying equipment.

In another embodiment, at least one probe that continuously measures humidity is positioned at the exit of the drying equipment.

From the reading carried out by the temperature and humidity probes, the device automatically corrects the entry flow of brewers' grain and/or the temperature flow, providing more or less heat input with the ventilation of the burner.

In one embodiment, there is at least one filter sleeve for particles on the outside of the drying equipment.

In another embodiment, there is at least one filter sleeve for dust on the outside of the drying equipment.

In one embodiment, there is at least one filter sleeve for particles and at least one filter sleeve for dust on the outside of the drying equipment.

### Examples of application

In a trial using 11,500.00 kg of humid brewers' grain, the total time drying was 5 hours. The final dry product weighed 3,500.00 Kg.

In this trial, the temperature probe at the entrance of the dryer measured between 150 to 200 °C, according to the variation of the burner, and the temperature probe at the exit of the dryer measured between 35 to 40 °C.

Laboratory trials were performed on the humid and dried brewers' grain to determine the nutritional value and humidity content.

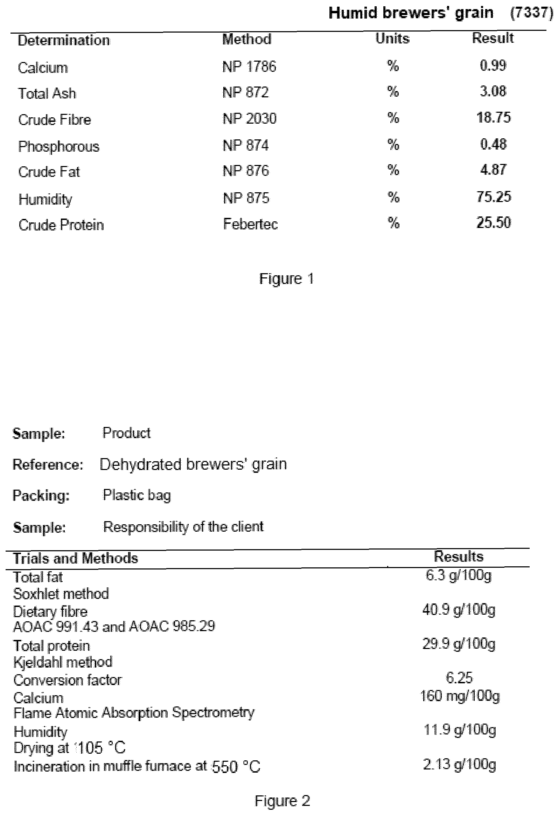

The results obtained for the humid brewers' grain (Figure 1) demonstrate an humidity content of 75.25% (w/w) and a protein content of 25.50% (w/w).

After the process, as can be observed in Figure 2, the humidity content obtained was 11.9 g for each 100 g of brewers' grain (11.9% (w/w)).

Naturally, the present technology is not in any way restricted to the embodiments described in this document and a person skilled in the art could anticipate many possibilities to modify the technology without departing from the general idea, as defined in the claims.

All the embodiments described above are obviously combinable between themselves. The following claims additionally define the preferred embodiments.

1 - Boessinger, M.; Hug, H.; Wyss, U., 2005. Les drêches brasserie, un aliment protéique intéressant. UFA Revue, 4/05, 8401 Winterthour Lisbon, September 21, 2017

## Claims

1. The process of dehydration and granulation of brewers' grain comprising the following stages:
- collection of the brewers' grain from the brewing industry;
- the brewers' grain is sent to a press (decanter);
- removal of 5 to 15% (w/w) of the total humidity of the brewers' grain;
- the squeezed brewers' grain is sent to the drying equipment;
- drying of the brewers' grain;
- the dry brewers' grain is sent to a granulating machine;
- the granulated brewers' grain is sent to the cooling equipment;
- cooling of the granulated brewers' grain;
- the cooled brewers' grain is bagged and stored;
- wherein the humidity content of the brewers' grain decreases from between 60 to 80% (w/w) before the process to between 10 to 15% (w/w) after the process.

2. Process of dehydration and granulation of brewers' grain according to the previous claim, **characterized in that** the drying occurs at a temperature between 150 to 200 °C at the entrance of the drying equipment and at a temperature between 35 to 40 °C at the exit of the drying equipment.

3. Process of dehydration and granulation of brewers' grain according to any one of the previous claims, **characterized in that** the granulated brewers' grain are cooled between 15 to 30 °C.

4. Process of dehydration and granulation of brewers' grain according to any one of the previous claims, **characterized in that** the granulated brewers' grain are cooled between 21 to 25 °C.

5. Dehydrated and granulated brewers' grain obtained through the process described in any one of the previous claims, **characterized by** being used as a food supplement in cattle feed.
